# EUROPEAN PATENT APPLICATION

(11) **EP 3 610 965 A1**
(43) Date of publication of application: **19.02.2020**
(21) Application number: 18189313.2
(22) Date of filing: 16.08.2018
(51) Int. Cl.: B21K 25/00, B23K 9/20, B21K 1/44, B21K 1/46, B23K 35/02

(54) **METHOD OF MANUFACTURING A WELDING STUD**

(71) Applicant: Newfrey LLC, New Britain, CT 06053 (US)
(72) Inventor: RHIEL, Johannes, 35394 Gießen (DE); SCHNEIDER, Martin, 35394 Gießen (DE); PIMPER, Ralf, 35394 Gießen (DE); SCHMITT, Andreas, 35394 Gießen (DE); PIEH, Timo, 35394 Gießen (DE)
(74) Representative: SBD IPAdmin

(57) **Abstract**

Method of manufacturing a welding stud (10, 10') adapted to be welded to a workpiece and comprising a welding portion (12, 12') of light metal and a function portion (14, 14') of steel, characterized by the following steps:
a. Providing a welding part (120, 120') of light material, wherein the welding part comprises one of a recess or a protrusion;
b. Providing a function part (140, 140') of steel comprising the other of the recess or protrusion;
c. Providing a press with a die (D) and a punch (P);
d. Arranging the welding part (120, 120') and the function part (140, 140') together such that the protrusion cooperates with the recess;
e. Manufacturing the welding stud (10, 10') by impacting the welding part (120, 120') and the function part (140, 140') into the die (D) by the punch (P) such that the protrusion cooperates with the recess to form the welding stud (10', 10) with the welding part (120, 120') forming the welding portion (12, 12') and the function part (140, 140') forming the function portion (14, 14'), such that the welding portion form a sleeve on the function portion.

## Description

The present invention relates to a method of manufacturing a welding stud. More specifically, the present invention is directed to a method of manufacturing welding studs made of two different materials.

Welding studs are used, notably in the automotive industry, to fix studs onto the surface of workpieces. For example, the welding studs are fastened in a welding process onto a part of a chassis, wherein the welded stud is welded by its welding part to the chassis part, and components are then fastened onto a function part of the welding stud by use of nuts or clamps.

In many areas of technology, the focus is on lightweight assemblies and constructions. In particular light weight material are used. Lightweight materials might be for example high-strength steel, aluminum, or glass fiber-reinforced polymer composites and may be used replacing heavy steel materials. Such materials can decrease component weight by 10 to 60 percent. In light-weight car bodies, lightweight materials are used as construction materials, notably to reduce the fuel consumption. However, the strength of some of these materials, for example the aluminum alloy is considerably lower than the strength of heavy steel. The lack of strength is problematic when releasable connections of components are to be made. Therefore such interface are still often made with steel. On the other side, aluminium material can be easily welded to a workpiece, but the welding of heavy steel may be more difficult.

In order to provide a light welding stud easily weldable, document EP1207000 discloses a welding stud comprising a welding portion and a function portion. The welding portion is made of lightweight material and the function portion is made of steel. The function portion has a tip which engages complementary recess of the welding portion and the tip and the recess are connected by a friction welding connection.

The connection by friction welding of materials such like aluminum alloy and steel might be brittly, notably due to the formation of intermetallic phase seams. The contact between the two portions is not always secured, in particularly under vibrating load. Besides, a risk of corrosion may occur. Finally, the friction welding connection enable only few shape or cross-section shape of the portions.

It is hence an object of the present invention to at least alleviate the aforementioned shortcomings. More particularly one objective of the present invention is to provide a method of easily manufacturing a light welding stud, resistant to corrosion, with a good sealing and a secured connection between the two parts or portions.

To this aim, according to the invention, it is provided a method of manufacturing a welding stud adapted to be welded to a workpiece and comprising a welding portion of light metal and a function portion of steel, characterized by the following steps:
a. Providing a welding part of light material, wherein the welding part comprises one of a recess or a protrusion;
b. Providing a function part of steel comprising the other of the recess or protrusion;
c. Providing a press with a die and a punch;
d. Arranging the welding part and the function part together such that the protrusion cooperates with the recess;
e. Manufacturing the welding stud by pressing the welding part and the function part into the die by the punch such that the protrusion cooperates with the recess to form the welding stud with the welding part forming the welding portion and the function part forming the function portion.

The welding stud is made of two different materials allowing an assembly of the welding stud to different components, without reducing the strength or the torques which might apply to the function part. The manufacture of the hybrid welding stud is done by cold forming and more particularly through impact extrusion. The welding part and the function part are securely connected to each other. The manufacture is easy to implement.

In an embodiment, the function part comprises a shank extending along a longitudinal axis, a press-fit area and a flange arranged between the shank and the press-fit area, wherein the flange extends radially outwardly from the shank. Thus, the flange forms a first supporting surface facing the shank and an abutment surface for the welding part or welding portion opposite the supporting surface.

In an embodiment, the shank comprises a threaded portion. The threaded portion allows the fixation of different components. The impact extrusion is still possible.

In an embodiment, the punch is connected to the shank and wherein the welding part is arranged on the die. The welding part can easily be arranged on the die.

In an additional embodiment, the press-fit area is the protrusion and the protrusion comprises a frusto conical shape with the smaller-diameter end extending from the flange and the larger-diameter end arranged in the recess. The frusto conical shape allows a better junction of the parts.

In an additional embodiment, the outer surface of the protrusion extends with an angle between 2 and 7 deg. with regard to the longitudinal axis. For example, the angle is of 5 degrees. This angle allows an improved assembly.

In an embodiment, the die comprises a die recess with a chamfered edge. The chamfered edge allows a better disassembly of the welding stud from the die and also to create a chamfered area on the welding stud.

In an embodiment, the press-fit area is a recess. The recess is adapted to cooperate with a protrusion from the function part. The welding part thus forms a sleeve.

In an embodiment, the recess is defined by lateral walls, wherein the lateral walls comprise an inner surface, an outer surface, wherein the inner surface extends sensibly parallel to the longitudinal axis, wherein the outer surface extends radially outwardly tapered from the flange. Thus, the lateral walls, in cross section have a triangle shape.

In an embodiment, the welding stud is formed by pressing the lateral walls toward the longitudinal axis when the function part extends in the recess such that the free ends of the lateral walls anchor in the function part.

In an embodiment, the die comprises a die recess closed by an ejector pin. The ejector pin allows to better disassemble the welding stud from the die and to improve the process speed.

In an embodiment, the ejector pin is tapered to form a tip on the function portion during the press of the function part.

In an embodiment the welding part is in aluminium material. The aluminium material (or aluminium alloy) comprises good welding properties.

The present invention is further directed to a welding stud realized according to the above-mentioned method.

Other characteristics and advantages of the invention will readily appear from the following description of embodiments, provided as non-limitative examples, in reference to the accompanying drawings.

In the drawings:
Fig. 1 schematically shows a welding stud according to a first embodiment with a welding portion and a function portion;
Fig. 2 schematically shows a welding part and a function part in a press with a die and a punch before pressing the welding part and the function part to realize the welding stud of Fig. 1;
Fig. 3 schematically shows the welding stud of Fig. 1 with a welding portion formed by the welding part and a function portion formed by the function part after impact extrusion;
Fig. 4 shows a welding part and a function part before impact extrusion according to a second embodiment;
Fig. 5 shows the welding stud with a welding portion formed by the welding part of Fig. 4 and a function portion formed by the function part of Fig. 5 after impact extrusion.

On the different figures, the same reference signs designate identical or similar elements.

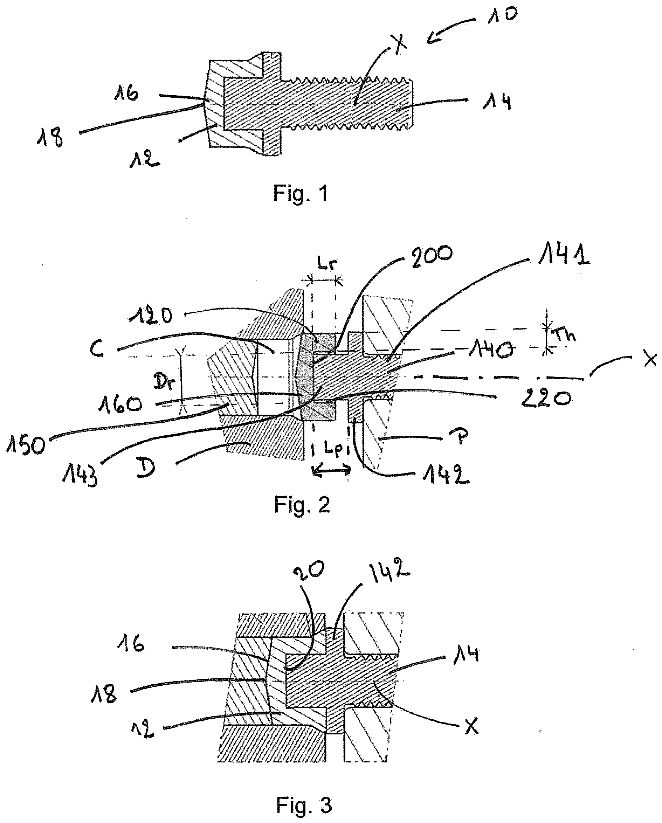

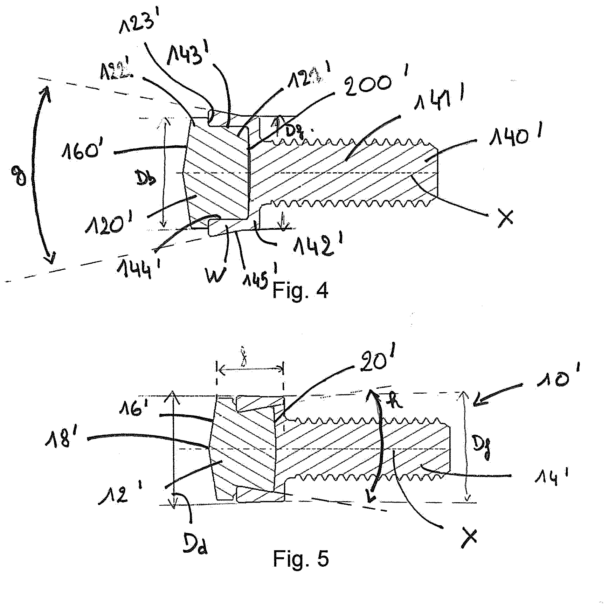

Fig. 1 and Fig. 5 show two embodiments of a welding stud 10, 10' and more particularly of a hybrid welding stud. The welding stud 10, 10' comprises a welding portion 12, 12' and a function portion 14, 14'. The welding stud 10, 10' is adapted to be welded to a workpiece, for example to a vehicle body. More particularly the welding portion 12, 12' of the welding stud 10, 10' is welded to the body vehicle, whereas the function portion 14, 14' is adapted to be connected to different components. The welding portion 12, 12' and the function portion 14, 14' are made in two different materials.

For instance, the welding portion 12, 12' is made of a good weldable material such as aluminium alloy, whereas the function portion is made of steel material.

The welding portion 12, 12' is made from a welding part 120, 120', whereas the function portion 14 comes from a function part 140, 140'. The welding part is made in a first material, and notably in light-weight material such as aluminium. The function art is made of steel.

More particularly, in order to manufacture the welding stud of Fig. 1 or Fig. 4, the function part 140, 140' and the welding part 120, 120' are joined together by impact extrusion. The impact extrusion is a cold forming process. A die D and a punch P are used to press at an extreme force and/or a high velocity the function part 140, 140' against the welding part into the die D. For instance, the function part 140, 140' or the welding part 120, 120' is placed in the die D (also called mold). The welding part 140, 140' or function part 120, 120' in the die is struck with a great force by the function part or the welding part. The material of the part in the die then flows into a predetermined position in order to form the hybrid welding stud 10. 10'.

For instance, for the welding stud 10 of Fig. 1, the function part 140 impacts the welding part 120 at such a force that it allows the welding part notably to be transformed into a plastic state that allows the welding part to flow into the die and around the function part.

Before the cold forming process, the welding part 120 and the function part 140 are independent from each other. After the cold forming process, both parts are fixedly joined to each other.

As illustrated in Fig. 1, Fig. 3 or Fig. 5, the welding portion 12, 12' comprises a top section 16, 16' adapted to be welded to the workpiece. The top section 16, 16' is adapted to form a weld nugget. The top portion 16, 16' may be flat or may be provided, as illustrated in Fig. 1 and Fig. 5, with a tip 18, 18'. The tip 18, 18' improves the welding process of the welding stud 10, 10' to the workpiece. More particularly, the surface of the top section 16, 16' may have a conical shape with the edge of the cone being the tip 18, 18'. In other embodiments, the top portion comprises several portions extending non-parallel to each other and which form the tip.

The welding portion 12, 12' comprises a rear section 20, 20' opposite the top section 16, 16'. The rear section 20, 20' is adapted to face the function portion 14, 14'.

The top section 16, 16' is formed by a top section 160, 160' of the welding part 120, 120'. The rear section 20, 20' is formed by a rear section 200, 200' of the welding part 120, 120'.

In the first embodiment, illustrated in Fig. 2, the rear section 200 is provided with a recess 220. The recess 220 is a blind hole and not a through hole. The recess 220 comprises a circular cross-section with lateral walls extending around a recess axis Xr. The recess comprises a recess diameter Dr and a recess length Lr. The recess is surrounded by lateral walls having a thickness Th. The bottom of the recess is destined to form the welding nugget.

In the embodiment of Fig. 2, the function part 140 extends along a longitudinal axis X between a first end section and a second end section. The function part 140 comprises a shank 141 extending along the longitudinal axis X, a press-fit area 143 adapted to cooperate with the recess 220 and a flange 142 arranged between the shank 141 and the press-fit area 143, wherein the flange 142 extends radially outwardly from the shank 141.

The shank 141 comprises a screwthread portion.

The press-fit area 142 is a protrusion. More particularly the press-fit area 142 is formed by the continuity of the shank beyond the flange. For instance, the protrusion comprises a frusto conical shape with the smaller-diameter end extending from the flange and the larger-diameter end being a free end. The protrusion comprises a protrusion length Lp along the longitudinal axis X. The outer surface of the protrusion extends with an angle between 2 and 7 deg. with regard to the longitudinal axis. For example, the angle is of sensibly 5 degrees.

The protrusion is adapted to be arranged in the recess 22 just before the cold forming process, as illustrated in Fig. 2. The larger diameter of the protrusion is smaller than the recess diameter. The protrusion length Lp is greater than the recess length Lr.

For the impact extrusion process, the welding part 120 is arranged in the die D (or a mold). The die is for example located on a mechanical or hydraulic press. More particularly, the die D has an inner wall defining an extrusion cavity C. The cavity C comprises a bottom end. The shape of the extraction cavity corresponds to the size required for the generation of the welding portion.

The bottom end can include a protruding point for generating a dimple in the welding portion. The bottom end can be partially or completely formed by an ejector pin 150, allowing a better ejection of the welding stud once formed.

The free end of the inner wall can be chamfered, allowing a better cold forming and a better ejection. The welding part is disposed for instance on the chamfered edge.

The press comprises also the punch P. The punch P is securely connected to the function part 140, such that the punch and the function part form together a punching unit. A portion of the punching unit is receivable in the die D. More particularly, the protrusion is receivable in the die D. The manufacture of the welding stud can be performed by advancing the punching unit into the recess 220 with sufficient force to extrude metal from the welding part between the punching unit and the die to form the desired welding portion, as depicted in Fig. 3. The welding portion 12 thus form a tube or a sleeve around the protrusion.

More particularly, after the cold forming, the welding portion 12 entirely surrounds the protrusion and abuts against the flange 142. The shape and the size of the recess gives the shape and the size of the welding portion formed. The chamfered edge allows the welding portion 12 to form a slope in the direction of the flange, such that the surface of the flange facing the protrusion is entirely covered by the welding portion. The thickness of the welding portion around the protrusion is sensibly constant. The bottom of the welding portion (which forms the top section 16) is thick enough to be welded to a workpiece without undamaging or interfering with the function portion.

In the first embodiment, the cold forming modifies the shape of the welding part 120 to form the welding portion 12, whereas the shape of the function part 140 remains sensibly unchanged and corresponds to the shape of the function portion 14.

In the second embodiment, in reference to Fig. 4 and 5, the shape of both the function part 120' and the welding part 140' is modified during cold forming to form the welding stud.

As illustrated in Fig. 4, before cold forming, the function part 140' comprises a recess which form the press-fit area 143'. The flange 142' forms the bottom of the recess. The recess is defined by lateral walls W. The lateral walls W comprise an inner surface 144', an outer surface 145' opposite the inner surface. The inner surface 144' extends sensibly parallel to the longitudinal axis X. The outer surface 145' extends radially outwardly tapered from the flange. More particularly, the outer surface of the wall forms in cross section an angle g. The recess 143' comprises a circular cross-section and has a recess diameter. The flange can be a sphere or a hemisphere.

The welding part 120', in the second embodiment is a token having a first section 121' with a first diameter adapted to be inserted in the recess of the function part, and a second section 122' with a second diameter, larger than the first diameter and adapted to remain outside the recess. The first diameter and the recess diameter are substantially similar. The interface between the first section and the second section forms an elbow 123' and the edge of the lateral walls of the function part is adapted to rest against said elbow.

During the cold forming, the lateral walls W of the recess are pressed radially in the direction of the token, and more particularly in the direction of the first section. By pressing the lateral walls in the direction of the first section, the token is deformed. The free end of the lateral wall W anchors in the first section. The deformation of the function part 140' can be such that, the outer surface of the lateral wall extends sensibly parallel to the longitudinal axis X after the cold forming. For instance, after the cold forming, the inner surface of the lateral wall defines in cross section an angle h.

During the impact extrusion, it is to be noted that the flange 142' and more particularly the support surface of the flange facing the shank 141' is not deformed. Thus, the diameter of the flange Df remains unchanged before and after cold forming. For this purpose, the diameter of the second section of the token Db, the diameter of the flange Df, the end diameter of the lateral wall after deformation Dd, and the thickness of the flange along the lateral axis X are specially matched to one another. For instance, as depicted in the drawings, the end diameter of the lateral wall after deformation Dd is greater than the diameter of the flange Df. Besides, the end diameter of the lateral wall after deformation Dd is greater than the diameter of the second section of the token Db. The recess diameter is smaller than the end diameter of the lateral wall after deformation Dd. More particularly, the ratio between the recess diameter (or the first diameter) and the end diameter of the lateral wall after deformation Dd is between 0.2 and 0.9. For instance the ratio is of 0.8.

The angle g is chosen so that it generates sufficient pressure in the formed state (angle h) to hold the token in the function part. The angle g is for example between 15 and 35 degrees, or between 20 and 30 degrees and more particularly the angle g may be of 26 degrees.

The longitudinal length f between the supporting surface of the flange 141' and the outside edge of the second section of the welding part is to be matched with the final length e between the supporting surface of the flange 141' and the outside edge of the second section 122' of the welding portion.

By increased torsional loading, the functional part 140' (more particularly in the recess) and the welding part 120' (only the first section 121', not the second section designed to form the welding nugget) can be arranged with a particular contour, which avoids twisting of the aluminium to steel component under torque loading, e.g. hexagonal shaper, internal serration, hexagon or octagon. Alternatively, the cold forming operation may be performed on the outer surface of the lateral wall to create for instance a polygon contour. The shape is then transferred from the function portion 14' to the welding portion 12' and thus a positive connection of the function parts and welding parts is generated and prevents rotation of the components to each other.

## Claims

1. Method of manufacturing a welding stud (10, 10') adapted to be welded to a workpiece and comprising a welding portion (12, 12') of light metal and a function portion (14, 14') of steel, **characterized by** the following steps:
a. Providing a welding part (120, 120') of light material, wherein the welding part comprises one of a recess or a protrusion;
b. Providing a function part (140, 140') of steel comprising the other of the recess or protrusion;
c. Providing a press with a die (D) and a punch (P);
d. Arranging the welding part (120, 120') and the function part (140, 140') together such that the protrusion cooperates with the recess;
e. Manufacturing the welding stud (10, 10') by impacting the welding part (120, 120') and the function part (140, 140') into the die (D) by the punch (P) such that the protrusion cooperates with the recess to form the welding stud (10', 10) with the welding part (120, 120') forming the welding portion (12, 12') and the function part (140, 140') forming the function portion (14, 14'), such that the welding portion form a sleeve on the function portion.

2. Method according to claim 1, wherein the function part (140, 140') comprises a shank (141, 141') extending along a longitudinal axis X, a press-fit area (143, 143') and a flange (142, 142') arranged between the shank and the press-fit area, wherein the flange extends radially outwardly from the shank.

3. Method according to claim 2, wherein the shank (141, 141') comprises a threaded portion.

4. Method according to claim 2 or 3, wherein the punch (P) is connected to the shank (141, 141') and wherein the welding part (120, 120') is arranged on the die (D).

5. Method according to any of claims 2 to 4, wherein the press-fit area (143) is the protrusion and wherein the protrusion comprises a frusto conical shape with the smaller-diameter end extending from the flange and the larger-diameter end arranged in the recess.

6. Method according to claim 5, wherein the outer surface of the protrusion extends with an angle between 2 and 7 deg. with regard to the longitudinal axis.

7. Method according to any of the preceding claims, wherein the die comprises a die cavity (C) with a chamfered edge.

8. Method according to any of claims 1 to 4, wherein the press-fit area (143') is a recess.

9. Method according to claim 8, wherein the recess is defined by lateral walls (W), wherein the lateral walls comprise an inner surface (144'), an outer surface (145'), wherein the inner surface extends sensibly parallel to the longitudinal axis, wherein the outer surface extends radially outwardly tapered from the flange.

10. Method according to claim 9, wherein the welding stud (10') is formed by pressing the lateral walls toward the longitudinal axis when the function part extends in the recess such that the free ends of the lateral walls anchor in the function part.

11. Method according to any of the preceding claims, wherein the die (D) comprises a die recess closed by an ejector pin (150).

12. Method according to claim 11, wherein the ejector pin (150) is tapered to form a tip on the function portion (14, 14') during the press of the function part.

13. Method according to any of the preceding claims, wherein the welding part is in aluminium material.

14. Welding stud (10, 10') adapted to be welded to a workpiece and comprising a welding portion of light metal and a function portion of steel and manufactured according to the method of any of claims 1 to 13.
